# EUROPEAN PATENT APPLICATION

(11) **EP 2 924 968 A1**
(43) Date of publication of application: **30.09.2015**
(21) Application number: 13856514.8
(22) Date of filing: 10.10.2013
(51) Int. Cl.: H04N 1/387, G06F 3/12, G06T 1/00, H04N 1/00

(54) **IMAGE DATA DISTRIBUTION SERVER**

(30) Priority: 20.11.2012 JP 2012253890
(71) Applicant: The Intelligent Willpower Corporation, Tokyo 106-0041 (JP)
(72) Inventor: YOSHIMURA, Shin, Tokyo 106-0041 (JP); FUJIWARA, Toshiki, Tokyo 106-0041 (JP)
(74) Representative: Ashton, Gareth Mark
(86) International application number: PCT/JP2013/077593
(87) International publication number: WO 2014/080704

(57) **Abstract**

To provide an image data distribution server that is capable of distributing digitally watermarked image data that correspond to the ranks of user access rights to client terminals.

[Solution]

An image data distribution server (11) has: an image data generation means that generates multiple sets of image data of various kinds on individual images of multiple pieces of electronic information of various kinds that are stored in the server; a rank-based classification means that, upon receiving requests from users for distribution of the image data, classifies the access rights of the respective users to the image data in terms of ranks on the basis of authentication results for the users; a display form changing means that adds digital watermarks that correspond to the respective access right ranks classified by the rank-based classification means to the image data in an unremovable manner; and an image data distribution means that distributes the multiple sets of image data of various kinds, including the image data to which the digital watermarks are added, to client terminals (12A-12C).

## Description

### [Technical Field]

The present invention relates to an image data distribution server for distributing various types of a plurality of pieces of image data to clients through the Internet in response to requests from the clients.

### [Background Art]

There is disclosed an image data distribution system which is comprised of multifunctional electric equipment connected to a network and including a scanner function or electric equipment as single scanner equipment, a remote server for storing and managing an original scanned and acquired by the electric equipment, as digital image data, and a personal computer connected to the remote server via the network, the remote server distributing the digital image data stored therein to the personal computer via the network (see Patent Literature 1).

In the image data distribution system, among image data confirmed through a web browser, image data desired to be distributed is downloaded to a personal computer of the user via the network. It should be noted that in order to limit users who are allowed to browse image data which are available to an unspecified number of users, management passwords are respectively set for image data, and the limited users are notified of the passwords, so that the image data are available to the limited users by way of the passwords. In the image data distribution system, to allow browsing and downloading within only a certain group, by presenting the password to the group, it is possible to allow only the user requiring the data to utilize the image data.

### [Citation List]

### [Patent Literature]

[Patent Literature 1]
Japanese Patent Laid-Open No. 2003-32425

### [Summary of Invention]

### [Technical Problem]

If access authority for the image data according to ranks is provided to the users, in order to prevent the image data from leaking to others, there is a case where the image data should not be distributed as is without a display form of the image data being changed depending on the ranks of the access authority of the users. In the image data distribution system disclosed in Patent Literature 1, while various types of a plurality of pieces of image data are distributed to only users having browsing authority by utilizing a specific password, it is impossible to distribute image data in respective display forms according to ranks of access authority of the users to the respective personal computers, and it is thus impossible to prevent image data which is required to be kept confidential or protected from leaking to others, and it is impossible to prevent image data which is not allowed to be copied or duplicated from being copied or duplicated.

Further, depending on the ranks of the users, it is not necessary to allow browsing of all the image data, and it is necessary to prevent browsing of image data which is not allowed to be browsed. However, in the image data distribution system disclosed in

Patent Literature 1, while the distribution destination of the image data is sharply distinguished by the password, because browsing of the image data is not limited according to ranks of access authority of the users, it is impossible to prevent browsing of the image data which is not allowed to be browsed.

An object of the present invention is to provide an image data distribution server which is capable of distributing image data in a display form corresponding to the rank of access authority of each user to each client, which is capable of preventing image data which is required to be kept confidential or protected from leaking to others, and which is capable of preventing image data which is not allowed to be copied or duplicated from being copied or duplicated.

### [Solution to Problem]

It is assumed that, to solve the above-described problem, the present invention is an image data distribution server which distributes various types of a plurality of pieces of image data to clients via the Internet in response to requests from a plurality of users.

The present invention on the assumption as described above has features that the image data distribution server includes image data creating means for creating various types of a plurality of pieces of image data which are individual images formed from various types of a plurality of pieces of electronic information stored in the image data distribution server, rank-based classifying means for, when users request for distribution of the image data via clients, classifying access authority of the users for image data into ranks based on authentication results for the users, display form changing means for changing display forms of the image data according to ranks of the access authority classified by the rank-based classifying means, and image data distributing means for distributing various types of a plurality of pieces of image data including the image data for which the display forms are changed by the display form changing means to the clients.

According to one example of the present invention, the display form changing means changes a display form of image data to be distributed to a user having a lower rank of the access authority to a larger extent than change performed on a display form of image data to be distributed to a user having a medium rank of the access authority and changes the display form of the image data to be distributed to the user having a medium rank of the access authority to a larger extent than change performed on a display form of image data to be distributed to a user having a higher rank of the access authority.

According to another example of the present invention, the image data distribution server includes digital watermark creating means for creating various types of a plurality of unique digital watermarks corresponding to respective ranks of the access authority, and the display form changing means changes the display forms of image data by pasting digital watermarks corresponding to the respective ranks of the access authority classified by the rank-based classifying means to the image data so as not to be able to be separated.

According to another example of the present invention, the display form changing means makes a display ratio of a digital watermark for the image data which requires large change of the display form larger than a display ratio of a digital watermark for image data which requires medium change of the display form, and makes the display ratio of the digital watermark for the image data which requires medium change of the display form larger than a display ratio of a digital watermark for image data which requires small change of the display form.

According to another example of the present invention, the display form changing means adds more decoration to the digital watermark to be pasted to the image data which requires large change of the display form than decoration added to the digital watermark to be pasted to the image data which requires medium change of the display form and adds more decoration to the digital watermark to be pasted to the image data which requires medium change of the display form larger than decoration added to the digital watermark to be pasted to the image data which requires small change of the display form.

According to another example of the present invention, the display form changing means provides more pattern to the digital watermark to be pasted to the image data which requires large change of the display form than pattern provided to the digital watermark to be pasted to the image data which requires medium change of the display form and provides more pattern to the digital watermark to be pasted to the image data which requires medium change of the display form than pattern provided to the digital watermark to be pasted to the image data which requires small change of the display form.

According to another example of the present invention, the display form changing means makes the number of terms of the digital watermark to be pasted to the image data which requires large change of the display form larger than the number of terms of the digital watermark to be pasted to the image data which requires medium change of the display form and makes the number of terms of the digital watermark to be pasted to the medium change of the display form larger than the number of terms of the digital watermark to be pasted to the image data which requires small change of the display form.

According to another example of the present invention, the display form changing means makes the number of pictures of the digital watermark to be pasted to the image data which requires large change of the display form larger than the number of pictures of the digital watermark to be pasted to the image data which requires medium change of the display form and makes the number of pictures of the digital watermark to be pasted to the image data which requires medium change of the display form larger than the number of pictures of the digital watermark to be pasted to the image data which requires small change of the display form.

According to another example of the present invention, the digital watermark includes identification information of each user who requests distribution of image data.

According to another example of the present invention, the image data distribution server includes data first classifying means for classifying the image data into image data to which the digital watermark is required to be pasted and image data to which the digital watermark is not required to be pasted based on content of the electronic information, and the display form changing means pastes the digital watermark only to the image data to which the digital watermark is required to be pasted classified by the data first classifying means.

According to another example of the present invention, the image data distribution server includes data second classifying means for classifying the image data into image data to which the digital watermark is required to be pasted and image data to which the digital watermark is not required to be pasted based on a file format of the electronic information, and the display form changing means pastes the digital watermark only to the image data to which the digital watermark is required to be pasted classified by the data second classifying means.

### [Advantageous Effects of Invention]

According to the image data distribution server according to the present invention, access authority of users for image data is classified for each rank based on authentication results of the users, the display forms of the image data are changed according to ranks of the access authority of the users, and various types of a plurality of pieces of image data including the image data for which the display forms have been changed are distributed to the clients, so that it is possible to prevent image data which is required to be kept confidential or protected from leaking to others by displaying that the image data is required to be kept confidential or protected for image data which is required to be kept confidential or protected and distributing to the clients the image data in display forms displaying that the image data is required to be kept confidential or protected. Further, the image data distribution server can prevent image data which is not allowed to be copied or duplicated from being copied or duplicated by, for example, displaying that image data is not allowed to be copied or duplicated for image data which is not allowed to copied or duplicated and distributing to the clients the image data in display forms displaying that the image data is not allowed to be copied or duplicated.

The image data distribution server which changes the display form of the image data to be distributed to a user having a lower rank of the access authority to a larger extent than change performed on the display form of the image data to be distributed to a user having a medium rank of the access authority and changes the display form of the image data to be distributed to the user having a medium rank of the access authority to a larger extent than change performed on the display form of the image data to be distributed to a user having a higher rank of the access authority, distributes the image data for which the display form has been changed to a large extent to the user having a lower rank of the access authority, so that it is possible to prevent the image data from leaking to others from the user having a lower rank of the access authority and prevent the image data from being copied or duplicated by the user having a lower rank of the access authority.

In the image data distribution server which changes the display form of the image data by creating various types of a plurality of unique digital watermarks corresponding to the respective ranks of the access authority and pasting the digital watermarks corresponding to the respective ranks of the access authority classified by the rank-based classifying means to the image data so as not to be able to be separated, because the image data distribution server distributes the image data for which the display forms have been changed to the clients by pasting the digital watermarks to the image data, the image data with the digital watermark which cannot be separated are displayed at the clients, so that it is possible to prevent the image data from leaking, being copied, or duplicated by way of the digital watermarks.

The image data distribution server which makes the display ratio of the digital watermark for the image data which requires large change of the display form larger than the display ratio of the digital watermark for the image data which requires medium change of the display form and makes the display ratio of the digital watermark for the image data which requires medium change of the display form larger than the display ratio of the digital watermark for the image data which requires small change of the display form, can emphasize the necessity of the image data being kept confidential or protected by making the display ratio of the digital watermark for the image data which requires large change of the display form larger than the display ratio of the digital watermark for the image data which requires medium change of the display form, so that it is possible to prevent the image data from leaking, being copied or duplicated. Further, the image data distribution server can insist on the necessity of the image data being kept confidential or protected by making the display ratio of the digital watermark for the image data which requires medium change of the display form larger than the display ratio of the digital watermark for the image data which requires small change of the display form, so that it is possible to prevent the image data from leaking, being copied or duplicated. Further, by also pasting a digital watermark with a predetermined display ratio to the image data which requires small change of the display form, it is possible to prevent the image data from leaking, being copied or duplicated.

The image data distribution server which adds more decoration to the digital watermark to be pasted to the image data which requires large change of the display form than the decoration added to the digital watermark to be pasted to the image data which requires medium change of the display form and adds more decoration to the digital watermark to be pasted to the image data which requires medium change of the display form than the decoration added to the digital watermark to be pasted to the image data which requires small change of the display form, can emphasize the necessity of the image data being kept confidential or protected by adding more decoration to the digital watermark to be pasted to the image data which requires large change of the display form than the decoration added to the digital watermark to be pasted to the image data which requires medium change of the display form, so that it is possible to prevent the image data from leaking, being copied or duplicated. Further, the image data distribution server can insist on the necessity of the image data being kept confidential or protected by adding more decoration to the digital watermark to be pasted to the image data which requires medium change of the image data than the decoration added to the digital watermark to be pasted to the image data which requires small change of the image data, so that it is possible to prevent the image data from leaking, being copied or duplicated. Further, by also pasting a digital watermark with predetermined decoration to the image data which requires small change of the display form, it is possible to prevent the image data from leaking, being copied or duplicated.

The image data distribution server which provides more pattern to the digital watermark to be pasted to the image data which requires large change of the display form than pattern provided to the digital watermark to be pasted to the image data which requires medium change of the display form and provides more pattern to the digital watermark to be pasted to the image data which requires medium change of the display form than pattern provided to the digital watermark to be pasted to the image data which requires small change of the display form, can emphasize the necessity of the image data being kept confidential or protected by providing more pattern to the digital watermark to be pasted to the image data which requires large change of the display form than the pattern provided to the digital watermark to be pasted to the image data which requires medium change of the display form, so that it is possible to prevent the image data from leaking, being copied or duplicated. Further, the image data distribution server can insist on the necessity of the image data being kept confidential or protected by providing more pattern to the digital watermark to be pasted to the image data which requires medium change of the display form than the pattern provided to the digital watermark to be pasted to the image data which requires small change of the display form, so that it is possible to prevent the image data from leaking, being copied or duplicated. Further, by also pasting the digital watermark with predetermined pattern to the image data which requires small change of the display form, it is possible to prevent the image data from leaking, being copied or duplicated.

The image data distribution server which makes the number of terms of the digital watermark to be pasted to the image data which requires large change of the display form larger than the number of terms of the digital watermark to be pasted to the image data which requires medium change of the display form and makes the number of terms of the digital watermark to be pasted to the medium change of the display form larger than the number of terms of the digital watermark to be pasted to the image data which requires small change of the display form, can emphasize the necessity of the image data being kept confidential or protected by pasting the digital watermark with a large number of terms to the image data which requires large change of the display form, so that it is possible to prevent the image data from leaking, being copied or duplicated. Further, the image data distribution server can insist on the necessity of the image data being kept confidential or protected by pasting a digital watermark with a corresponding number of terms to the image data which requires medium change of the display form, so that it is possible to prevent the image from leaking, being copied or duplicated. Still further, by also pasting a digital watermark with a predetermined number of terms to the image data which requires small change of the display form, it is possible to prevent the image data from leaking, being copied or duplicated.

The image data distribution server which makes the number of pictures of the digital watermark to be pasted to the image data which requires large change of the display form larger than the number of pictures of the digital watermark to be pasted to the image data which requires medium change of the display form and makes the number of pictures of the digital watermark to be pasted to the image data which requires medium change of the display form larger than the number of pictures of the digital watermark to be pasted to the image data which requires small change of the display form, can emphasize the necessity of the image data being kept confidential or protected by pasting the digital watermark with a larger number of pictures to the image data which requires large change of the display form, so that it is possible to prevent the image data from leaking, being copied or duplicated. Further, the image data distribution server can insist on the necessity of the image data being kept confidential or protected by pasting a digital watermark with a corresponding number of pictures to the image data which requires medium change of the display form, so that it is possible to prevent the image data from leaking, being copied or duplicated. Still further, by also pasting a digital watermark with a predetermined number of pictures to the image data which requires small change of the display form, it is possible to prevent the image data from leaking, being copied or duplicated.

The image data distribution server in which the digital watermark includes identification information of each user who requests distribution of the image data can know the user who requests the image data or a client to which the image data is distributed because the identification information of each user who requests distribution of the image data is included in the digital watermark, so that, for example, even if the image data leaks to others, the leakage destination can be recognized, which can serve as a deterrent to leakage of the image data, so that it is possible to prevent the image data from leaking. Further, even if the image data is copied or duplicated, the copy destination or the duplication destination can be recognized, which can serve as a deterrent to copy or duplication of the image data, so that it is possible to prevent the image data from being copied or duplicated.

In the image data distribution server which classifies the image data into image data to which the digital watermark is required to be pasted and image data to which the digital watermark is not required to be pasted based on content of the electronic information and pastes the digital watermark only to the image data to which the digital watermark is required to be pasted, for example, by pasting a digital watermark such as "Confidential" to the image data which includes highly-confidential content or which includes academic value at the server side so as not to be able to be separated, and distributing the image data in a display form in which the digital watermark is pasted from the server to the client, it is possible to prevent image data which is an image formed from the electronic information including confidential content or academic value from leaking to others. Further, by pasting a digital watermark such as "NoCopy" and "No Duplication", to the image data which is an image formed from the electronic information including confidential content or academic value so as not to be able to be separated at the server side and distributing the image data in the display form in which the digital watermark is pasted from the server to the client, it is possible to prevent the image data from being copied or duplicated.

In the image data distribution server which classifies the image data into image data to which the digital watermark is required to be pasted and image data to which the digital watermark is not required to be pasted based on a file format of the electronic information and pastes the digital watermark only to the image data to which the digital watermark is required to be pasted, for example, by pasting a digital watermark such as "Confidential" to image data which is an image formed from the electronic information in a file format which requires to be kept confidential or protected at the server side so as not to be able to be separated and distributing the image data in a display form in which the digital watermark is pasted from the server to the client, it is possible to prevent the image data from leaking to others. Further, in the image data distribution server, by pasting a digital watermark such as "NoCopy" and "No Duplication" to the image data which is an image formed from the electronic information in a file format which requires restriction of copy or duplication at the server side and distributing the image data in a display form in which the digital watermark is pasted from the server to the client, it is possible to prevent the image data from being copied or duplicated.

### [Brief Description of Drawings]

[Figure 1] Figure 1 is a conceptual diagram illustrating a configuration of an example of an image data distribution system.
[Figure 2] Figure 2 is a flowchart for explaining image formation of electronic information.
[Figure 3] Figure 3 is a flowchart illustrating an example of image data distribution procedure.
[Figure 4] Figure 4 illustrates an example of a digital watermark.
[Figure 5] Figure 5 illustrates another example of the digital watermark.
[Figure 6] Figure 6 illustrates still another example of the digital watermark.
[Figure 7] Figure 7 illustrates one example of image data to which a digital watermark is pasted.
[Figure 8] Figure 8 illustrates another example of the image data to which a digital watermark is pasted.
[Figure 9] Figure 9 illustrates still another example of the image data to which a digital watermark is pasted.

### [Description of Embodiment]

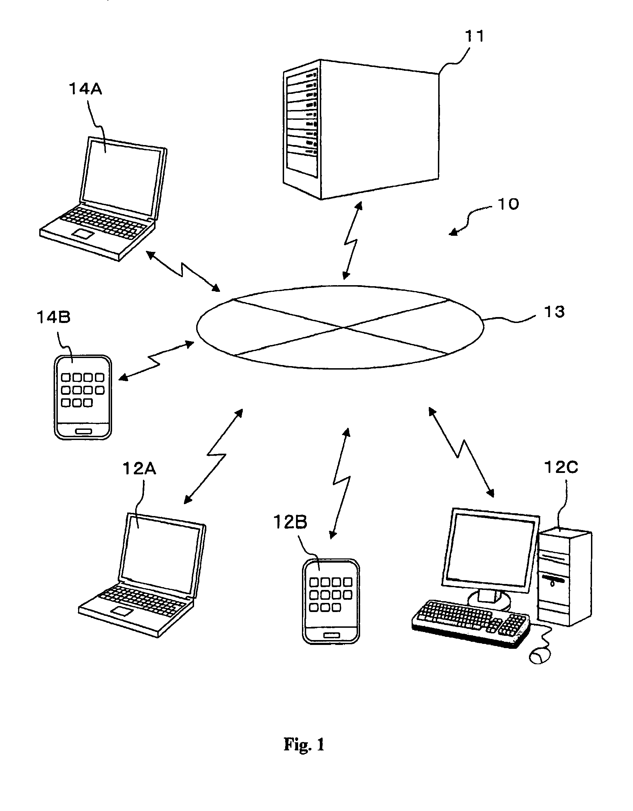

An image data distribution server 11 according to the present invention will be described in detail below with reference to the drawings such as Figure 1 which is a conceptual diagram illustrating a configuration of an example of an image data distribution system 10. It should be noted that while Figure 1 illustrates three client terminals 12A to 12C, actually, there are countless client terminals which can access the image data distribution server 11 via the Internet 13.

The image data distribution system 10 includes the image data distribution server 11 which stores various types of a plurality of pieces image data, and a plurality of client terminals 12A to 12C (clients) which request distribution of the image data to the image data distribution server 11. The image data distribution server 11 is provided or virtualized at a data center with which an image data provider providing image data for profit or for free makes a contract. It should be noted that the server 11 may be provided at the image data provider which provides image data. The client terminals 12A to 12C are held and managed by users (audience) who utilize image data.

The image data distribution server 11 which is a physical computer or a virtual computer including a central processing unit (a CPU or an MPU) and memories (a main memory and a cache memory), incorporates a physical high-capacity hard disc or a virtualized high-capacity hard disc. It should be noted that input devices such as a keyboard and a mouse, and output devices such as a display and a printer, which are not illustrated, are connected to the image data distribution server 11 via interfaces.

To the image data distribution server 11, various servers, which are not illustrated, such as a DNS server for setting association between host names and IP addresses to be assigned to the host names, a database file server for providing functions of receiving requests from other computers and other servers and reading and writing various information, a Web server required for making a website public on the Internet, a mail server for transmission and reception of e-mails, and a document server for storing all the created data such as text and images so as to be able to be retrieved, are connected, and these servers form a server group. It should be noted that there is a case where the server 11 itself has a DNS server function, a database server function, a Web server function, a mail server function and a document server function, and includes a software for each function. The server 11 can access other various servers by utilizing the Internet 13 via various types of a plurality of DNS servers, or the like, connected to the Internet 13.

In the hard disc of the image data distribution server 11, authentication information of registered users (client terminals 12A to 12C) who desire distribution of image data from the server is stored. When password authentication is performed, authentication information is a login ID and a password of each user, and, when certificate authentication is performed, authentication information is a login ID and certificate information of each user. When authentication is performed using a USB or an ID card, authentication information is a login ID and a password of each user, and an ID number, and, when biometrics authentication is performed, authentication information is a login ID of each user and biological information of each user.

In the hard disc of the image data distribution server 11, identification information (personal information and client terminal identification information) of the users registered to the server 11 is stored. The identification information of the users includes client terminal identification information such as IP addresses of the client terminals 12A to 12C, MAC addresses of the client terminals 12A to 12C, URLs of the client terminals 12A to 12C (servers), Cookie information (user registration information) of the client terminals 12A to 12C and individual identification numbers of the client terminals 12A to 12C, and personal information such as e-mail addresses of the users, names of the users (corporate names or personal names), addresses or whereabouts of the users, phone numbers of the users, FAX numbers of the users, ages of the users, sex of the users, business information of the users (such as company names, types of business, types of jobs, departments, qualification and posts in the companies), and digital photographs of appearance of the users.

These client terminals 12A to 12C which are physical computers having central processing units (CPUs or MPUs) and memories (main memories and cache memories) and operating independently by operating systems (OS), implement high-capacity hard discs. To each of the client terminals 12A to 12C, an input device such as a keyboard and a mouse, an output device such as a display and a printer are connected via interfaces. To the client terminals 12A to 12C, a DNS server, a database file server and a Web server are connected. In the hard discs of the client terminals 12A to 12C, client terminal identification information for identifying the respective terminals 12A to 12C is stored. The client terminal identification information includes IP addresses, MAC addresses, URLs, e-mail addresses, Cookie information and individual identification numbers of the client terminals 12A to 12C.

In the memories of the client terminals 12A to 12C, web browsers are stored, and URLs of physical external servers (computers) and virtual servers (computers) provided at the respective positions are stored. These client terminals 12A to 12C can access the Internet 13 by utilizing the web browsers and the servers connected to the Internet 13, can access and log in to an unspecified number of other servers (physical servers and virtual servers) via the Internet 13 and can utilize various types of search engines on the Internet 13.

The image data distribution server 11 and the client terminals 12A to 12C can be connected to each other via the Internet 13, and utilization of the Internet 13 enables access from the server 11 to the client terminals 12A to 12C and access from the terminals 12A to 12C to the server 11. The client terminals 12A to 12C request distribution of various types of image data to the server 11 via the Internet 13, and the server 11 distributes various types of image data to the terminals 12A to 12C via the Internet 13.

When a user logs in to the image data distribution server 11 for the first time, the client terminals 12A to 12C are connected to the Internet 13, and a website of the server 11 is displayed on displays by utilizing a search engine (including a case where the website is displayed via link from another server and a case where the website is displayed using a URL), and the user performs registration from the website of the server 11. The user performs user registration procedure on a user setting registration screen on the website of the server 11 displayed on the displays of the client terminals 12A to 12C.

As one example of user registration, a user registration icon is clicked from the website of the server 11 to display the user setting registration screen, and a name (a corporate name or a personal name) of the user is input in a user name input area of the user setting registration screen, an address or whereabouts of the user is input in a user address input area, a phone number of the user is input in a user phone number input area, a FAX number of the user is input in a user FAX number input area, and an age of the user is input in an age input area. Further, a sex of the user is input in a sex input area, each authentication information is input in an authentication information input area, an e-mail address of the user is input in an e-mail address input area, and business information (a type of business, a type of a job, department, qualification and a post in the company) of the user is input in a business information input area.

When these data are input and a registration setting button is clicked, a confirmation screen for these data is displayed on the displays of the terminals 12A to 12C. The input data is confirmed, and, if there is no error in the data, a confirmation button is clicked. When the confirmation button is clicked, authentication information and identification information (personal information and client terminal identification information) of the user input to each input area is transmitted to the image data distribution server 11 via the Internet 13 and stored in the hard disc of the server 11. After these information is stored, the server 11 generates a login ID corresponding to each user and transmits the login ID and IMS (Image Date Management system) application to the client terminals 12A to 12C (servers) and installs the IMS application to the client terminals 12A to 12C, and thereby user registration to the server 11 is completed. It should be noted that when the registered user requests provision (downloading) of predetermined image data to the server 11 via the client terminals 12A to 12C, it is necessary to perform authentication procedure between the server 11 and the terminals 12A to 12C. If the user is certified, the image data requested by the client terminals 12A to 12C is downloaded from the server 11.

IMS application is stored in an internal address file of the cache memory of the image data distribution server 11. The central processing unit of the server 11 activates the IMS application stored in the internal address file of the memory based on control by the independent operating system (OS), and executes the following means according to the activated application.

The central processing unit of the image data distribution server 11 executes electronic information storing means for receiving various types of a plurality of pieces of electronic information and file formats transmitted from the client terminals 12A to 12C (servers) of the users and client terminals 14A and 14B (servers) of other senders, and storing the electronic information and the file formats (including information as to whether or not a digital watermark is required to be pasted) in hard discs in association with identification information of the users and the senders. The central processing unit of the server 11 executes image data creating means for creating various types of a plurality of pieces of image data which are images individually formed by the IMS application from the electronic information (electronic data in various types of file formats) stored in the hard discs. The image data creating means assigns file format names and predetermined names to the image data while forming images of the electronic information.

The central processing unit of the image data distribution server 11 executes URL generating means for generating unique URLs associated with the created various types of a plurality of pieces of image data and executes image data storing means for storing the created image data in the hard disc or the database server (including a case where each software is provided). The image data storing means stores the generated image data, information as to whether or not a digital watermark is required to be pasted (whether or not the display form should be changed) which will be described later, file format names, names of the image data in the hard disc or the database server in association with the generated URLs.

The central processing unit of the image data distribution server 11 executes rank-based classifying means for classifying access authority of the users for the image data into ranks based on authentication results of the users when the users requests distribution of the image data via the client terminals 12A to 12C. The rank-based classifying means requests provision of various types of proof (attributes) to the terminals 12A to 12C, and the terminals 12A to 12C provide various proof (attributes) to the server 11 when the authentication procedure is performed on the client terminals 12A to 12C(access point). The image data distribution server 11 evaluates security policies of the terminals 12A to 12C based on the proof provided from the client terminals 12A to 12C and determines ranks of the access authority (access permission level) of the users according to the security policies. The rank-based classifying means classifies the access authority (access permission level) of the users into, for example, a limited browsing user rank, a general user rank, a special user rank, a management user rank, or the like.

The central processing unit of the image data distribution server 11 executes digital watermark creating means for creating digital watermarks in various types of a plurality of unique predetermined forms corresponding to the ranks of the access authority classified by the rank-based classifying means, and executes digital watermark storing means for storing the created digital watermarks in the hard disc or the database server (including a case where each software is provided). The central processing unit of the server 11 executes display form changing means for pasting the digital watermarks to the image data so as not to be able to be separated (changing the display forms of the image data) according to the ranks of the access authority, and executes image data storing means for storing the image data to which the digital watermarks are pasted in the hard disc or the database server (including a case where each software is provided).

The digital watermark image data storing means stores the image data to which the digital watermarks are pasted, the file format names, the image data names in the hard disc or the database server in association with the URLs. The display form changing means changes the display forms of the image data by pasting the digital watermarks corresponding to the ranks of the access authority classified by the rank-based classifying means to the image data so as not to be able to be separated. The digital watermarks include identification information (personal information and client terminal identification information) of each user who requests distribution of the image data. The digital watermark creating means determines the forms of the digital watermarks (whether the display form is changed to a large extent, to a medium extent or to a small extent) according to user ranks classified by the rank-based classifying means.

The central processing unit of the image data distribution server 11 executes data first classifying means for classifying the image data into image data to which the digital watermark is required to be pasted and image data to which the digital watermark is not required to be pasted based on content of the electronic information. Whether or not the digital watermark is required to be pasted (whether or not the display form should be changed) is determined by the image data provider according to the content of the electronic information from which the image is formed. For example, the digital watermark is required to be pasted to image data of the electronic information including content with high security policy, while the digital watermark is not required to be pasted to image data of the electronic information including general content with low security policy. Further, the digital watermark is required to be pasted to image data of electronic information including advanced academic content, while the digital watermark is not required to be pasted to image data of electronic information including normal content of magazines or weekly magazines. While the central processing unit of the server 11 picks up keywords of the electronic information to determine whether or not the digital watermark is required to be pasted, the image data provider eventually judges whether or not the digital watermark is required to be pasted.

The central processing unit of the image data distribution server 11 executes data second classifying means for classifying the image data into image data to which the digital watermark is required to be pasted and image data to which the digital watermark is not required to be pasted based on the file format of the electronic information. Whether or not the digital watermark is required to be pasted (whether or not the display form should be changed) is determined by the image data provider based on the file format of the electronic information from which the image is to be formed. For example, it is determined that the digital watermark is required to be pasted to image data of electronic information in file formats of ipg files, png files, cgi files, asp files, avi files, mpg files, rm files, wmv files, aif files and mp3 files, while the digital watermark is not required to be pasted to image data of electronic information in file formats of pdf files, bmp files and wma files.

It should be noted that, in the image data distribution server 11, when one of the data first classifying means and the data second classifying means determines that the digital watermark is required to be pasted (image data is required to be changed), even if the other data classifying means determines that the digital watermark is not required to be pasted (image data is not required to be changed), it is judged that the digital watermark is required to be pasted, and pastes the digital watermark to the image data to which it is judged that the digital watermark is required to be pasted (changes the display form of the image data).

The display form changing means changes the image data for which the display form is required to be changed to a large extent (image data which requires large change) to a larger extent than image data for which the display form is required to be changed to a medium extent (image data which requires medium change). Specific examples of change include (1) a display ratio of the digital watermark to be pasted to the image data which requires large change of the display form is made larger than a display ratio of the digital watermark to be pasted to the image data which requires medium change of the display form, (2) more decoration is added to the digital watermark to be pasted to the image data which requires large change of the display form than decoration added to the digital watermark to be pasted to the image data which requires medium change of the display form, (3) more pattern is provided to the digital watermark to be pasted to the image data which requires large change of the display form than the pattern provided to the digital watermark to be pasted to the image data which requires medium change of the display form, (4) the number of terms of the digital watermark to be pasted to the image data which requires large change of the display form is made larger than the number of terms of the digital watermark to be pasted to the image data which requires medium change of the display form, and (5) the number of pictures of the digital watermark to be pasted to the image data which requires large change of the display form is made larger than the number of pictures of the digital watermark to be pasted to the image data which requires medium change of the display form. The display form changing means employs at least one of the above (1) to (5).

The display form changing means makes a display ratio of the digital watermark to be pasted to the image data which requires medium change of the display form larger than a display ratio of the digital watermark to be pasted to the image data for which the display form is required to be changed to a small extent (image data which requires small change of the display form). Specific examples include (6) the display ratio of the digital watermark to be pasted to the image data which requires medium change of the display form is made larger than the display ratio of the digital watermark to be pasted to the image data which requires small change of the display form, (7) more decoration is added to the digital watermark to be pasted to the image data which requires medium change of the display form than decoration added to the digital watermark to be pasted to the image data which requires small change of the display form, (8) more pattern is provided to the digital watermark to be pasted to the image data which requires medium change of the display form than the pattern provided to the digital watermark to be pasted to the image data which requires small change of the display form, (9) the number of terms of the digital watermark to be pasted to the image data which requires medium change of the display form is made larger than the number of terms of the digital watermark to be pasted to the image data which requires small change of the display form, and (10) the number of pictures of the digital watermark to be pasted to the image data which requires medium change of the display form is made larger than the number of pictures of the digital watermark to be pasted to the image data which requires small change of the display form. The display form changing means employs at least one of the above (6) to (10).

The central processing unit of the image data distribution server 11 executes terminal authenticating means for performing authentication procedure between the server 11 and the terminals 12A to 12C when receiving a request for transmission of the image data from the client terminals 12A to 12C (users). The central processing unit of the server 11 executes image data distributing means for distributing various types of a plurality of pieces of image data to which digital watermarks are pasted (display forms are changed) by the display form changing means and image data to which the digital watermark is not pasted (display forms are not changed) to the terminals 12A to 12C (servers) via the Internet 13 after performing authentication procedure between the server 11 and the client terminals 12A to 12C.

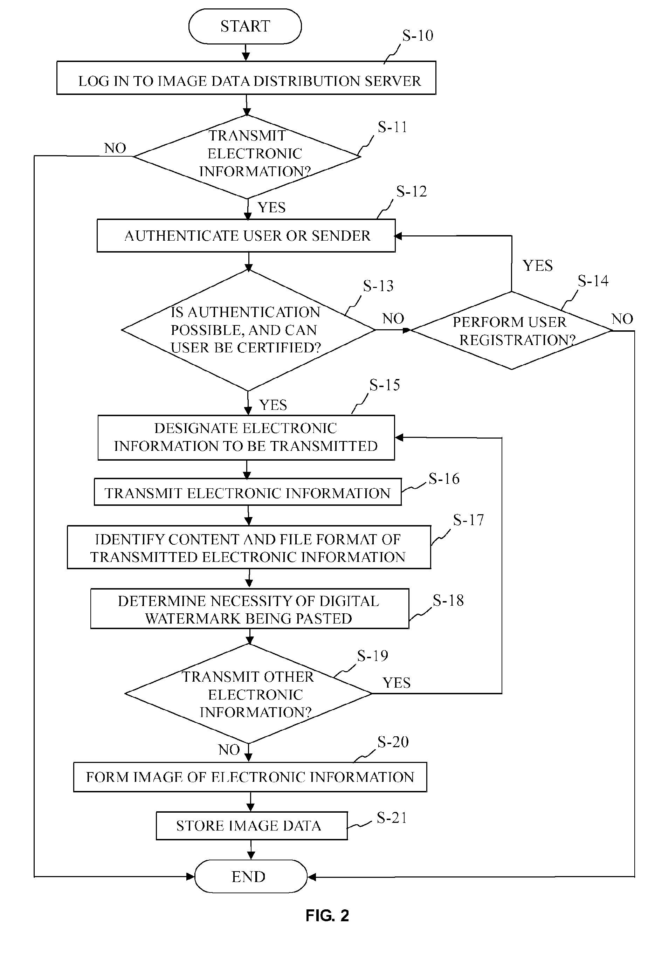

Figure 2 is a flowchart for explaining image formation of electronic information. Procedure of the image formation of the electronic information will be explained as follows based on the flowchart of Figure 2. It should be noted that it is assumed that a plurality of users are registered and IMS applications are installed to the client terminals 12A to 12C of the users. To transmit the electronic information, an unspecified number of users who are registered or an unspecified number of senders who are not registered connect the client terminals 12A to 12C and the client terminals 14A and 14B to the Internet 13 using web browsers.

After the client terminals 12A to 12C, 14A and 14B are connected to the Internet 13, the client terminals 12A to 12C, 14A and 14B log in to the website of the server 11 by utilizing the URL of the image data distribution server 11, a search engine or a link (S-10). After the client terminals 12A to 12C, 14A and 14B log in to the server 11, a main page (not illustrated) of the website of the server 11 is displayed on the displays of the terminals 12A to 12C, 14A and 14B. On the main page of the website of the server 11 displayed on the displays of the client terminals 12A to 12C, 14A and 14B, various types of a plurality of contents of the website, an electronic information transmission button, an image data distribution request button, a close button, other icons and various types of a plurality of links for jumping to other websites are displayed.

The users or the senders can transmit electronic information (electronic data) in predetermined file formats from the client terminals 12A to 12C, 14A and 14B (servers) to the image data distribution server 11 via the Internet 13 by clicking the electronic information transmission button. It should be noted that on the main page of the website, when the users or the senders click the close button, the client terminals 12A to 12C, 14A and 14B log out of the image data distribution server 11, and an initial setting website of the Internet 13 is displayed on the displays of the terminals 12A to 12C, 14A and 14B. When the user or the sender clicks the electronic information transmission button, a confirmation button for confirming transmission of the electronic information and a confirmation button for confirming non-transmission of the electronic information are displayed on the displays of the client terminals 12A to 12C, 14A and 14B.

When the confirmation button for confirming non-transmission of the electronic information is clicked, the image data distribution server 11 judges that the electronic information is not transmitted from the client terminals 12A to 12C, 14A and 14B (S-11), and displays the main page of the website of the server 11 on the displays of the terminals 12A to 12C, 14A and 14B. When the confirmation button for confirming transmission of the electronic information is clicked, the server 11 judges that the electronic information is transmitted from the client terminals 12A to 12C, 14A and 14B (S-11) and performs authentication procedure for authenticating the terminals 12A to 12C, 14A and 14B (users and senders) (S-12). In the authentication procedure, a screen for authentication upon transmission (not illustrated) is displayed on the displays of the client terminals 12A to 12C, 14A and 14B.

When the authentication procedure is password authentication, on the screen for authentication upon transmission, a login ID (user name) input area and a password input area are displayed. The user or the sender inputs a login ID (user name) in the login ID (user name) input area and inputs a password in the password input area displayed on the displays of the client terminals 12A to 12C, 14A and 14B. After the user or the sender inputs the login ID or the password, the user or the sender clicks the login button. When the login button is clicked, the image data distribution server 11 judges whether the input login ID and the password are true or not, and if the login ID and the password are true and correct, it is judged that the user or the sender can be certified, while if the login ID or the password is incorrect, it is judged that the user or the sender cannot be certified (S-13).

When the authentication procedure is certificate authentication, on the screen for authentication upon transmission, the login ID (user name) input area is displayed. The user or the sender inputs a login ID in the login ID (user name) input area displayed on the displays of the client terminals 12A to 12C, 14A and 14B, and clicks the login button. When the login button is clicked, first, the image data distribution server 11 transmits the login ID (user name) and certificate information upon acquisition of a certificate to the client terminals 12A to 12C, 14A and 14B. The client terminals 12A to 12C, 14A and 14B judge whether the information transmitted from the server 11 matches information held by the terminals 12A to 12C, 14A and 14B, and if the information matches, authenticates the server 11. Then, the client terminals 12A to 12C, 14A and 14B transmit the input login ID (user name) and the certificate information (a user certificate or a computer certificate) to the server 11. The server 11 judges whether the information transmitted from the terminals 12A to 12C, 14A and 14B matches information held by the server 11, and if the information matches, judges that the user or the sender can be certified. On the other hand, if the information does not match, the server 11 judges that the user or the sender cannot be certified (S-13).

When authentication is performed using a USB or an ID card, on the screen for authentication upon transmission, a login ID (user name) input area is displayed. The user or the sender inputs a login ID in the login ID (user name) input area displayed on the displays of the client terminals, and clicks the login button. When the login button is clicked, the client terminals 12A to 12C, 14A and 14B compare the input login ID with a login ID upon setting, and, if the login ID matches, a message for directing insertion of a USB or an ID card is displayed on the displays. The user or the sender inserts a USB for authentication into USB terminals of the client terminals 12A to 12C, 14A and 14B, or inserts an ID card into ID card readers of the terminals 12A to 12C, 14A and 14B. The client terminals 12A to 12C, 14A and 14B transmit a password or an ID number read from the USB or the ID card to the image data distribution server 11. The server 11 collates the password and the ID number transmitted from the terminals 12A to 12C, 14A and 14B with the password and the ID number stored in the server 11, and if the password and the ID number match, judges that the user or the sender can be certified. On the other hand, if the password or the ID number does not match, the server 11 judges that the user or the sender cannot be certified (S-13).

When biometrics authentication is performed, on the screen for authentication upon transmission, a login ID (user name) input area is displayed. The user or the sender inputs a login ID into the login ID (user name) input area displayed on the displays of the client terminals 12A to 12C, 14A and 14B and clicks the login button. When the login button is clicked, the client terminals 12A to 12C, 14A and 14B compare the input login ID with a login ID upon setting, and, if the login ID matches, displays a message for directing input of biological information on the displays. The user or the sender utilizes devices for authentication connected to the client terminals 12A to 12C, 14A and 14B to read biological information (such as fingerprint information, iris information, vein information and retinal information) of the user or the sender, and the terminals 12A to 12C, 14A and 14B transmit the biological information to the image data distribution server 11. The server 11 collates the biological information transmitted from the terminal with the biological information stored in the server 11, and, if the biological information matches, judges that the user or the sender can be certified. On the other hand, if the biological information does not match, the server 11 judges that the user or the sender cannot be certified (S-13).

It should be noted that if a sender who is not registered as a user transmits electronic information, because the sender is not registered as a user, it is impossible to perform authentication procedure for the client terminals 14A and 14B. In this case, the image data distribution server 11 displays a user setting registration screen (not illustrated) on the displays of the client terminals 14A and 14B, and inquires whether the sender is registered as a user (S-14). The sender (client terminals 14A and 14B) is registered as a user on the user setting registration screen, thereby being registered as a user to the server 11. When the user is registered as a user, the login ID of the sender (client terminals 14A and 14B) and the IMS application are transmitted from the image data distribution server 11 to the terminals 14A and 14B (servers), and the IMS application is installed on the terminals 14A and 14B (servers).

By being registered as a user, the sender (client terminals 14A and 14B) can acquire a login ID and a password for password authentication, can acquire a certificate for certificate authentication, and can acquire a login ID, a password and an ID number for USB authentication or ID card authentication. Because the procedure for user registration of the sender on the user setting registration screen is the same as the above-described procedure in the case where the user is registered as a user, the explanation thereof will be omitted. After the sender is registered as a user, authentication procedure is performed for the sender.

If the client terminals 12A to 12C, 14A and 14B (users or senders) can be certified, the image data distribution server 11 transmits an instruction to display a screen for transmission on the displays of the client terminals 12A to 12C, 14A and 14B to the terminals. The client terminals 12A to 12C, 14A and 14B activate the IMS application stored in the internal address files of the memories based on the instruction from the server 11, and display a screen for transmission (not illustrated) on the displays. On the screen for transmission, an electronic information selection region, a transmission button, a return button and a close button are displayed. In the electronic information selection region, various types of a plurality of pieces of electronic information which can be transmitted, and which are stored in memories or hard discs of the client terminals 12A to 12C, 14A and 14B are displayed. These electronic information is classified for each file format and displayed. When the return button is clicked, the main page of the website of the image data distribution server 11 is displayed on the displays, and, when the close button is clicked, the client terminals log out of the server 11, and the initial setting website of the Internet 13 is displayed on the displays.

The user or the sender selects information to be transmitted (inverts information to be transmitted) among the electronic information displayed in the electronic information selection region using input devices, designates the electronic information (S-15), and clicks the transmission button. When the transmission button is clicked, the image data distribution server 11 displays a screen for final confirmation of transmission (not illustrated) on the displays of the client terminals 12A to 12C, 14A and 14B. On the screen for final confirmation of transmission, a confirmation region in which the selected electronic information and the file format thereof are displayed, a transmission confirmation button, a return button and a cancel button are displayed. When the return button is clicked, selection of the selected electronic information is unselected, and the screen for transmission is displayed on the displays. When the cancel button is clicked, the main page of the website of the server 11 is displayed on the displays. When the user or the sender clicks the transmission confirmation button after confirming the electronic information and the file format in the confirmation region, the electronic information selected in the selection region (including the file format, the user identification information and the sender identification information) is transmitted from the client terminals 12A to 12C, 14A and 14B to the image data distribution server 11 via the Internet 13 (S-16).

The image data distribution server 11 receives the electronic information and picks up keywords of the electronic information, compares the picked up keywords with keywords stored in the hard disc, and specifies the level of the security policy and practical content of the electronic information from the matched keywords (S-17). The server 11 specifies the content of the electronic information, judges whether or not the digital watermark is required to be pasted based on the content, and classifies the electronic information into electronic information to which the digital watermark is required to be pasted and electronic information to which the digital watermark is not required to be pasted (data first classifying means) (S-18). Further, the server 11 specifies a file format of the electronic information and judges whether or not the digital watermark is required to be pasted based on the file format, and classifies the electronic information into electronic information to which the digital watermark is required to be pasted and electronic information to which the digital watermark is not required to be pasted (data second classifying means) (S-18).

After determining the necessity of the digital watermark, the image data distribution server 11 displays a screen for confirming the necessity (not illustrated) on the display connected to the image data distribution server 11. On the screen for confirming the necessity, the electronic information, names of the electronic information, the file formats of the electronic information, the necessity of the digital watermark, a necessity determination button, a clear button and a cancel button are displayed. When the clear button is clicked, the necessity of the digital watermark determined at the server 11 is cancelled, and the image data provider newly inputs the necessity of the digital watermark for the electronic information. When the cancel button is clicked, the main page of the website of the server 11 is displayed on the displays.

When the necessity determination button is clicked, the image data distribution server 11 attaches a task indicating that it is necessary to paste the digital watermark to the electronic information for which it is judged that the digital watermark is required to be pasted, and attaches a task indicating that it is not necessary to paste the digital watermark to the electronic information for which it is judged that the digital watermark is not required to be pasted. After attaching the task indicating that it is necessary to paste the digital watermark or the task indicating that it is not necessary to paste the digital watermark to the electronic information, the server 11 provides a name for each electronic information and provides a number for each electronic information and stores the electronic information, names of the electronic information, the number of the electronic information, the necessity of the digital watermark and the file format of the electronic information in association with identification information of the user or the sender (electronic information storing means).

After storing the electronic information, the image data distribution server 11 displays a reception completion message on the displays of the client terminals 12A to 12C, 14A and 14B and displays a screen for transmission, and inquires as to whether it is necessary to retransmit the electronic information to the user or the sender (S-19). When the user or the sender clicks the close button, an initial screen of the website of the server 11 is displayed on the displays. If it is necessary to retransmit the electronic information, the user or the sender selects information to be transmitted among the electronic information displayed in the selection region of the electronic information on the screen for transmission (inverts the information to be transmitted), clicks the transmission button and repeats the procedure from step 15 (S-15).

The image data provider can change whether or not the digital watermark is required to be pasted to the image data afterward via the image data distribution server 11. On the main page of the website displayed on the displays connected to the server 11, various types of a plurality of contents of the website, an electronic information display button, an image data display button, a user rank display button, a close button, other icons and various types of a plurality of links for jumping to other websites, which are not illustrated, are displayed.

When changing the necessity of the digital watermark being pasted, the image data provider clicks the electronic information display button on the main page of the website of the server 11. When the electronic information display button is clicked, the central processing unit of the image data distribution server 11 displays an electronic information reception screen on which various types of a plurality of pieces of electronic information are displayed on the displays. On the electronic information reception screen, the received electronic information, the names of the electronic information, the numbers of the electronic information, the file formats of the electronic information, identification information of the user or the sender who transmits the electronic information, information as to whether or not the digital watermark is required to be pasted, an image formation button, a necessity change button and a close button are displayed. When the close button is clicked, the main page of the website of the server 11 is displayed on the displays.

The image data provider designates specific electronic information by clicking the electronic information or the name of the electronic information on the electronic information reception screen, and displays the content of the electronic information on the displays in an overlapped manner, and after confirming the content of the electronic information, determines whether or not to change the necessity of the digital watermark. The image data provider can change whether or not the digital watermark is required to be pasted based on the result of confirmation of the content of the electronic information.

When it is necessary to change the necessity of the digital watermark, the image data provider clicks the necessity change button on the electronic information reception screen. When the necessity change button is clicked, the central processing unit of the image data distribution server 11 displays a necessity change screen (not illustrated) on the displays. On the necessity change screen, a necessity change confirmation region, a confirmation button and a cancel button are displayed. When the cancel button is clicked, the main page of the website of the server 11 is displayed.

In the necessity change confirmation region, various types of a plurality of pieces of electronic information, the names of the electronic information and the file formats of the electronic information are displayed. When the image data provider designates the electronic information for which the necessity of the digital watermark is required to be changed (inverts the electronic information for which the necessity of the digital watermark is changed) and clicks the confirmation button, the necessity change confirmation screen is displayed on the displays. On the necessity change confirmation screen, a check box to be checked when the digital watermark is required to be pasted to the designated electronic information, a check box to be checked when the digital watermark is not required to be pasted, a change confirmation button, a clear button and a cancel button are displayed.

When the clear button on the necessity change confirmation screen is clicked, a check mark placed in the check box is cleared, and the necessity change confirmation screen is displayed on the displays, and a check mark can be newly marked. When the cancel button is clicked, the main page of the website of the server 11 is displayed on the displays. The image data provider clicks the change confirmation button after placing a check mark in any of these check boxes. When the change confirmation button is clicked, whether or not the digital watermark is required to be pasted to the electronic information is changed.

When the necessity of the digital watermark for the electronic information for which the digital watermark is not required to be pasted is changed by change of the necessity of an digital watermark and it becomes necessary to paste the digital watermark to the electronic information, the image data distribution server 11 attaches a task indicating that it is necessary to paste the digital watermark to the electronic information, and, when the necessity of the digital watermark is changed by change of the necessity of the digital watermark and it becomes not necessary to paste the digital watermark, attaches a task indicating that it is not necessary to paste the digital watermark to the electronic information. After the necessity of the digital watermark is changed and a task indicating that it is necessary or it is not necessary to paste the digital watermark to the electronic information is attached, the server 11 stores the electronic information, the name of the electronic information, the number of electronic information and the file format of the electronic information in the hard disc in association with identification information of the user or the sender (electronic information storage means).

To form an image of the electronic information, the image data provider clicks the electronic information display button on the main page of the website of the server 11, displays the electronic information reception screen (not illustrated) on which the stored various types of a plurality of pieces of electronic information are displayed, and clicks the image formation button. When the image formation button is clicked, the central processing unit of the image data distribution server 11 displays an image formation screen on the displays. On the image formation screen, an image formation confirmation region, a return button and a cancel button are displayed. When the return button is clicked, a necessity confirmation screen is displayed on the displays, while, when the cancel button is clicked, the main page of the website of the server 11 is displayed on the displays. On the image formation confirmation screen, various types of a plurality of pieces of electronic information, the names of the electronic information, the file formats of the electronic information, a designation confirmation button and a clear button are displayed. When the clear button is clicked, designation of the electronic information is cancelled, and information is newly designated.

On the image formation screen, electronic information for which an image is to be formed is designated (electronic information for which an image is to be formed is inverted) in the image formation confirmation region, and the designation confirmation button is clicked. When the designation confirmation button is clicked, the central processing unit of the image data distribution server 11 displays an image formation confirmation screen (not illustrated) on the displays. On the image formation confirmation screen, a check box to be checked when it is necessary to form an image of the designated electronic information, a check box to be checked when it is not necessary to form an image of the designated electronic information, an image formation confirmation button, a clear button and a cancel button are displayed.

When the clear button on the image formation confirmation screen is clicked, a check mark placed on the check box is cleared, and the image formation confirmation screen is displayed on the displays, and a check mark can be newly placed. When the cancel button is clicked, the main page of the website of the server 11 is displayed on the displays. The image data provider places a check mark in any of these check boxes and clicks the image formation confirmation button. When the image formation confirmation button is clicked, the central processing unit of the image data distribution server 11 creates various types of a plurality of pieces of image data which are individual images formed from the electronic information (electronic data in various types of file formats), using the IMS application (image data creating means) (S-20).

The image data distribution server 11 provides an image data name for each image data which is formed as an image and provides a file format name for each image data. The server 11 generates unique URLs corresponding to the created various types of a plurality of pieces of image data (URL generating means), and stores the created image data in the hard disc or the database server (including a case where each software is provided) (image data storage means) (S-21). The server 11 stores the generated image data, information as to whether or not the digital watermark is required to be pasted to the image data (whether or not the display form is required to be changed), the file format names of the image data and the names of the image data in the hard disk or the database server in association with the unique URLs.

To confirm the image data which are images formed from the electronic information, the image data provider clicks the image data display button on the main page of the website of the server 11. When the image data display button is clicked, the central processing unit of the image data distribution server 11 displays the image data display screen on the displays. On the image data display screen, an image data display region, a detail display button, a delete button and a cancel button are displayed. When the cancel button is clicked, the main page of the website of the server 11 is displayed on the displays. On the image data display region, various types of a plurality of pieces of image data, the names of the image data, the file formats of the image data, information as to whether or not it is necessary to paste the digital watermark to the image data, electronic information before being formed as images corresponding to the image data, the names of the electronic information, and the file formats of the electronic information are displayed.

The image data provider designates image data for which its details are to be displayed (inverts the image data) in the image data display region and clicks the detail display button. When the detail display button is clicked, the image data distribution server 11 displays the detail display screen of the designated image data on the displays. On the detail display screen, the content of the image data, the name of the image data, the file format of the image data, information as to whether or not it is necessary to paste the digital watermark to the image data, the content of the electronic information before being formed as an image corresponding to the image data, the name of the electronic information, the file format of the electronic information, and identification information of the user or the sender who transmits the electronic information are displayed. The image data provider can confirm detailed information of each image by viewing the detail display screen.

To delete the image data formed as an image, the image data provider designates the image data to be deleted (inverts the image data) in the image data display region on the image data display screen and clicks the delete button on the image data display screen. When the delete button is clicked, the central processing unit of the image data distribution server 11 displays a delete confirmation screen on the displays. On the delete confirmation screen, the designated image data, a delete confirmation button and a clear button are displayed. When the clear button is clicked, the designation of the image data is cancelled, and the image data display screen is displayed on the displays. When the delete confirmation button is clicked, the image data distribution server 11 deletes the designated image data from the hard disc or the database server.

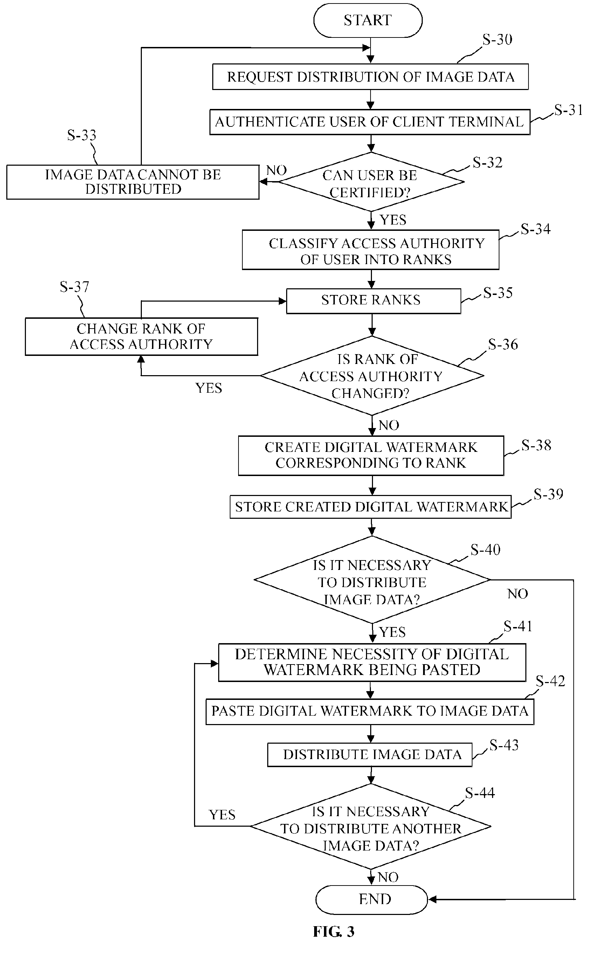

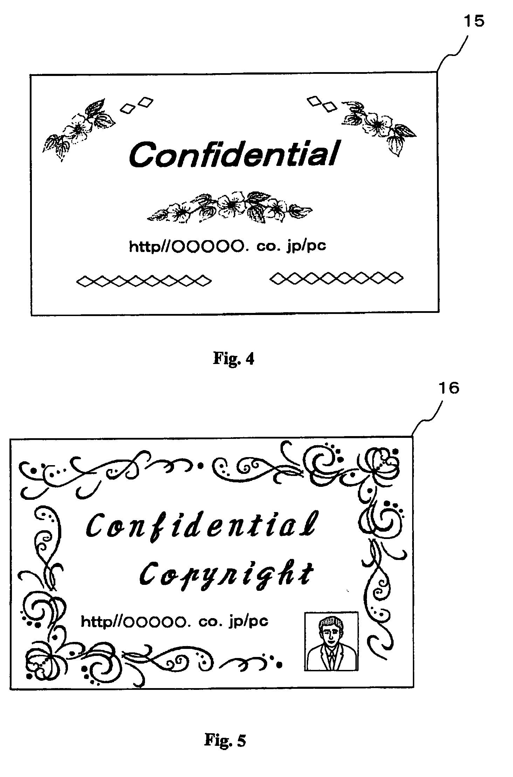

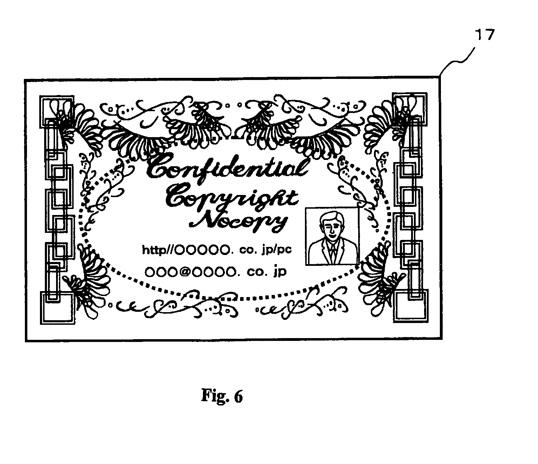

Figure 3 is a flowchart illustrating an example of image data distribution procedure. Figure 4 illustrates an example of the digital watermark, and Figure 5 illustrates an example of another example of the digital watermark. Figure 6 illustrates still another example of the digital watermark. The image data distribution procedure in the image data distribution server 11 will be described below based on the flowchart of Figure 3. It should be noted that various types of a plurality of pieces of image data are stored in the hard disc of the server 11 or the database server connected to the server 11.

To receive distribution of the image data, the user clicks the image data distribution request button on the main page of the website of the server 11 displayed on the displays of the client terminals 12A to 12C to request distribution of the image data to the server 11 (S-30). When the distribution request button is clicked, the image data distribution server 11 performs authentication procedure for authenticating the client terminals 12A to 12C (users) (S-31). In the authentication procedure, a screen for authentication upon distribution (not illustrated) is displayed on the displays of the client terminals 12A to 12C.

When the authentication procedure is password authentication, in a similar manner to the authentication upon transmission, if the login ID and the password are true, the server 11 judges that the user can be certified, while if the login ID or the password is incorrect, the server 11 judges that the user cannot be certified (S-32). When the authentication procedure is certificate authentication, in a similar manner to the authentication upon transmission, if the certificate information matches, the server judges that the user can be certified, while if the certificate information does not match, the server 11 judges that the user cannot be certified (S-32).

When the authentication is performed using a USB or an ID card, in a similar manner to the authentication upon transmission, if the password and the ID number read from the USB or the ID card match the password and the ID number stored in the server 11, it is judged that the user can be certified, while, if the password and the ID number read from the USB or the ID card do not match the password and the ID number stored in the server 11, it is judged that the user cannot be certified (S-32). When biometrics authentication is performed, in a similar manner to the authentication upon transmission, if the biological information matches, the server 11 judges that the user can be certified, while, if the biological information does not match, the server 11 judges that the user cannot be certified (S-32). If the client terminals 12A to 12C (user) cannot be certified, the image data distribution server 11 displays a message indicating that it is impossible to distribute the image data on the displays of the terminals 12A to 12C (S-33).

If the client terminals 12A to 12C (user) can be certified, the image data distribution server 11 requests provision of proof (attributes) to the terminals 12A to 12C, and the terminals 12A to 12C provide proof (attributes) to the server 11. The image data distribution server 11 evaluates security policies of the terminals based on the proof provided from the client terminals 12A to 12C and determines ranks of the access authority (access permission levels) of the users according to the security policies (rank-based classifying means) (S-34).

The ranks of the access authority (access permission levels) of the users include, for example, rank (A) (a user rank corresponding to a manager), rank (B) (a special user rank) and rank (C) (a general user rank). After classifying the access authority of the users into ranks, the image data distribution server 11 stores the ranks of the access authority in the hard disc or the database server in association with the identification information of the users (rank information storage means) (S-35). It should be noted that the ranks of the users are determined every time the authentication procedure is performed. Therefore, there is a case where the rank determined in the previous authentication procedure is different from the rank determined in the most recent authentication procedure.

The image data provider can change the rank of the access authority of the users afterward via the image data distribution server 11 (S-36). It should be noted that in the hard disc or the database server connected to the server 11, ranks A, B and C are stored as the ranks of the users. To change the rank of the access authority, the image data provider clicks a user rank display button on the main page of the website of the server 11. When the user rank display button is clicked, the image data distribution server 11 displays a user rank display screen on the displays. On the user rank display screen, names of a plurality of users, identification numbers set for these users, ranks set for these users, a rank change button and a close button are displayed. When the close button is clicked, the main page of the website of the server is displayed on the displays.

The image data provider designates a specific user (or users) by clicking the name of the user or the user number on the user rank display screen, and displays the identification information of the designated user and the proof (attributes) transmitted from the client terminals 12A to 12C upon authentication on the displays in an overlapped manner, and determines whether or not the rank set by the server 11 is appropriate after confirming the identification information and the proof of the users. The image data provider can change the rank of the access authority of each user based on the result of confirmation of the identification information and the proof of the users.

When it is necessary to change the rank, the image data provider clicks the rank change button on the user rank display button. When the rank change button is clicked, the image data distribution server 11 displays a rank change screen on the displays. On the rank change screen, a rank change confirmation region, a change button and a cancel button are displayed. When the cancel button is clicked, the main page of the website of the server is displayed.

In the rank change confirmation region, the names of the users and the user numbers of the users are displayed. When the image data provider designates a user for which the rank is required to be changed (inverts the user or the user number for which the rank is to be changed) in the rank change confirmation region and clicks the change button, a rank change confirmation screen is displayed on the displays. On the rank change confirmation screen, the rank prior to the change set for the designated user (rank A, rank B or rank C), a rank input area for the designated user, a rank change confirmation button, a clear button and a cancel button are displayed.

When the clear button on the rank change confirmation screen is clicked, the rank input in the rank input area is cleared, and the rank change confirmation screen is displayed on the displays, and a rank can be newly input in the rank input area. When the cancel button is clicked, the main page of the website of the server is displayed. The image data provider clicks the rank change confirmation button after inputting the changed rank in the rank input area. When the rank change confirmation button is clicked, the rank of the access authority for the user is changed (S-37).

When the rank is changed by the image data provider, the image data distribution server 11 stores the changed rank of the access authority in the hard disc or the database server in association with the identification information of the user (rank information storage means) (S-35). It should be noted that the rank of the user is determined every time the authentication procedure is performed. Therefore, there is a case where the rank changed by change of the rank is different from the rank determined in the most recent authentication procedure.

When the ranks of the access authority of the users are determined or when the ranks are changed, the image data distribution server 11 creates various types of a plurality of unique digital watermarks in predetermined formats corresponding to the determined or changed ranks (digital watermark creating means) (S-38). As an example of the digital watermark 15 corresponding to rank (A) (a user rank corresponding to a manager), Figure 4 illustrates "Confidential" written in substantially standard characters and an URL of the user (client terminals 12A to 12C) who requests image data, written in substantially standard characters, and predetermined decoration and predetermined pattern being provided around the characters and the URL.

As an example of the digital watermark 16 corresponding to rank (B) (a special user rank), Figure 5 illustrates "Confidential" written in a cursive style, "Copyright" written in a cursive style, an URL of the user (client terminals) who requests image data, written in substantially standard characters, and a digital photograph (identification information of the user) of the appearance of the user who requests the image data, and predetermined decoration and predetermined pattern being provided around the characters, the URL and the digital photograph. A display ratio of the digital watermark 16 of Figure 5 is larger than that of the digital watermark in Figure 4, more decoration and pattern are provided to the digital watermark 16 than those of Figure 4, and the number of terms and pictures of the digital watermark 16 is larger than that of Figure 4 by "Copyright" being added in addition to "Confidential".

As an example of the digital watermark 17 corresponding to rank (C) (a general user rank), Figure 6 illustrates "Confidential" written in decorative letters, "Copyright" written in decorative letters, "NoCopy" written in decorative letters, an URL of the user (client terminals) who requests the image data, written in substantially standard characters, an e-mail address of the user who requests the image data, written in substantially standard characters, and a digital photograph (identification information of the user) of the appearance of the user who requests the image data, and predetermined decoration and predetermined pattern being provided around the characters, the URL, the e-mail address and the digital photograph. A display ratio of the digital watermark 17 of Figure 6 is larger than that of the digital watermark in Figure 5, more decoration and pattern are provided to the digital watermark 17 than those of Figure 5, and the number of terms and pictures of the digital watermark 17 is larger than that of Figure 5 by "NoCopy" being added in addition to "Confidential" and "Copyright".

The image data distribution server 11 stores the created digital watermarks 15 to 17 corresponding to rank (A) to rank (C) in the hard disc or the database server in association with the identification information of the user (digital watermark storage means) (S-39). It should be noted that the rank of the user is determined every time the authentication procedure is performed, and a digital watermark corresponding to the determined rank is created by the server 11. Further, when the rank is changed by the image data provider, a digital watermark corresponding to the changed rank is created by the server 11.

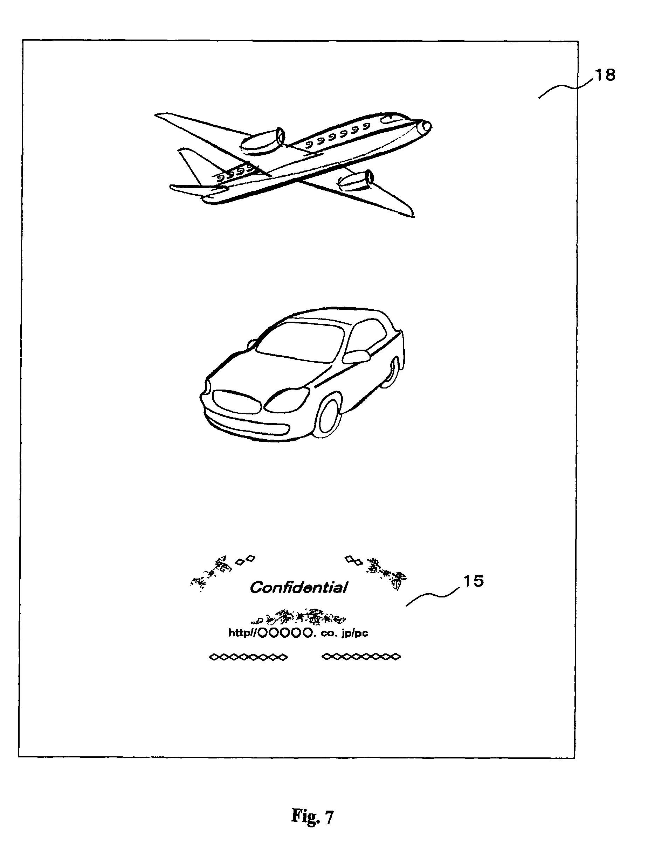

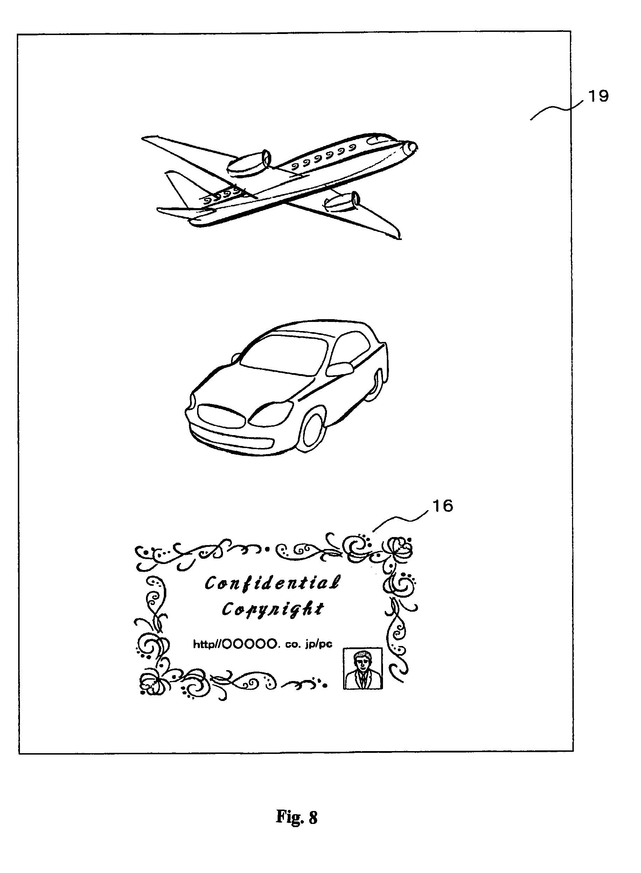

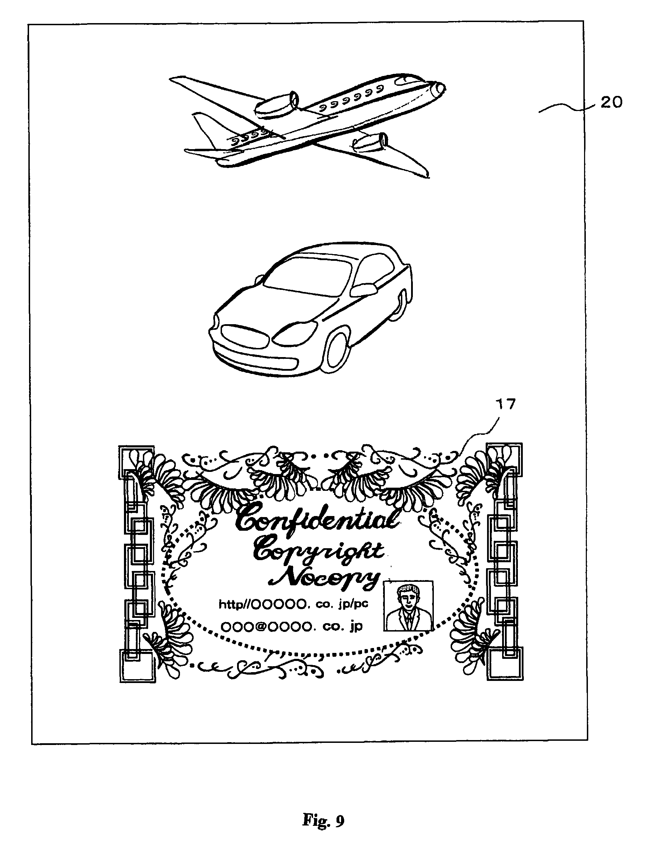

Figure 7 illustrates an example of image data 18 to which the digital watermark 15 is pasted, and Figure 8 illustrates another example of image data 19 to which the digital watermark 16 is pasted. Figure 9 illustrates still another example of image data 20 to which the digital watermark 17 is pasted. The digital watermark 15 of Figure 4 is pasted to the image data 18 of Figure 7, the digital watermark 16 of Figure 5 is pasted to the image data 19 of Figure 8, and the digital watermark 17 of Figure 6 is pasted to the image data 20 of Figure 9.

When it is judged that the client terminals 12A to 12C (user) can be certified, and the server 11 determines the rank of the access authority for the user, an image data distribution screen (not illustrated) is displayed on the displays of the terminals 12A to 12C. On the image data distribution screen, an image data category input area, an image data keyword input area, a file format input area, an image data search button, an all image data display button, an authentication result display area, a rank display area, a clear button and a close button are displayed.

In the authentication result display area, an authentication result (indicating that the user can be certified), and in the rank display area, the rank (A, B or C) of the access authority of the user is displayed. When the clear button is clicked, each data input to the image data category input area, the image data keyword input area and the file format input area is cleared, and data can be input again in these input areas. When the close button is clicked, the main page of the website of the server 11 is displayed on the displays of the client terminals 12A to 12C.

When the user clicks the all image data display button, the image data distribution server 11 displays a search result display screen (not illustrated) on which all the image data stored in the hard disc or the database server is displayed on the displays of the client terminals 12A to 12C. On the search result display screen, in addition to a display region of all the image data, a distribution execution button, a clear button and a cancel button are displayed. In the image data display region, scaled-down samples of the image data, names of the image data, URLs of the image data, file formats of the image data, and information as to whether the digital watermark is required to be pasted to the image data are displayed.

To receive distribution of the image data, the user designates image data (at least one of a scaled-down sample, a name and a URL) desired to be distributed by the user (inverts the image data desired to be distributed) in the image data display region and clicks the distribution execution button. When the clear button is clicked, designation of the image data is cancelled, and designation of image data is redone. When the cancel button is clicked, the main page of the website of the server 11 is displayed on the displays of the client terminals 12A to 12C.

When the distribution execution button is clicked, the image data distribution server 11 judges that the designated image data is to be distributed (S-40), extracts the designated image data from the hard disc or the database server and determines whether or not the digital watermark is required to be pasted to the image data from a task indicating that it is necessary to paste the digital watermark or a task indicating that it is not necessary to paste the digital watermark attached to the designated image data (S-41). The image data distribution server 11 determines whether or not the digital watermark is required to be pasted to the image data, selects a digital watermark to be pasted to the image data for which it is necessary to paste the digital watermark, and pastes the selected digital watermark to the image data so as not to be able to be separated (S-42).

For example, when the rank of the user is rank (A) and it is necessary to paste the digital watermark to the image data, the image data distribution server 11 judges that the display form of the image data is required to be changed to a small extent. As illustrated in Figure 7, the server 11 pastes the digital watermark 15 in which "Confidential" written in substantially standard characters and a URL of the user (client terminals 12A to 12C) who requests the image data, written in substantially standard characters are displayed, and predetermined decoration and predetermined pattern are provided around the characters and the URL, to the image data so as not to be able to be separated (changes the display form of the image data) (display form changing means) (S-42).

After pasting the digital watermark 15 to the image data, the image data distribution server 11 stores the image data 18 of Figure 7 to which the digital watermark 15 is pasted, the file format name and the name of the image data 18 in the hard disc or the database server in association with the URL (digital watermark image data storage means). Further, the server 11 distributes (downloads) the image data 18 of Figure 7 to which the digital watermark 15 is pasted to the client terminals 12A to 12C (servers) via the Internet 13 (image data distribution means) (S-43). It should be noted that the digital watermark is not pasted to the image data for which it is not necessary to paste a digital watermark regardless of ranks of the users. When the digital watermark is not pasted, the server 11 distributes (downloads) the image data to the client terminals 12A to 12C (servers) via the Internet 13 (image data distribution means).

At the client terminals 12A to 12C, the digital watermark 15 pasted to the image data 18 cannot be separated. The image data 18 distributed from the server 11 is displayed (output) on the displays of the client terminals 12A to 12C in a state where the digital watermark 15 is pasted, and printed (output) by printers of the terminals 12A to 12C in a state where the digital watermark 15 is pasted. The client terminals 12A to 12C stores the image data 18 distributed from the server 11 in the hard disc. After the image data 18 is stored in the hard disc, on the displays of the client terminals 12A to 12C, the image data distribution screen is displayed, and when the user requests distribution of other image data, the user clicks the all image data display button on the image data distribution screen, designates image data (at least one of a scaled-down sample, a name and a URL) desired to be distributed (inverts image data desired to be distributed) in the image data display region (S-44) and repeats the procedure from step S-41 (S-41). When the user does not request distribution of other image data, the user clicks the close button on the image data distribution screen (S-44).

When the rank of the user is rank (B), and it is necessary to paste a digital watermark to the image data, the image data distribution server 11 judges that the display form of the image data is required to be changed to a medium extent. As illustrated in Figure 8, the server 11 pastes the digital watermark 16 in which "Confidential" written in a cursive style, "Copyright" written in a cursive style, a URL of the user (client terminals 12A to 12C) who request the image data, written in substantially standard characters, and a digital photograph of the user who requests the image data are displayed and predetermined decoration and predetermined pattern are provided around the characters, the URL and the digital photograph, to the image data so as not to be able to be separated (changes the display form of the image data) (display form changing means) (S-42). A display ratio of the digital watermark 16 pasted to the image data 19 in Figure 8 is larger than that of the digital watermark pasted to the image data in Figure 7, more decoration and the pattern are provided to the digital watermark 16 than those of Figure 7, and the number of terms and pictures of the digital watermark 16 is larger than that of the digital watermark in Figure 7 by "Copyright" being added in addition to "Confidential".

After pasting the digital watermark 16 to the image data, the image data distribution server 11 stores the image data 19 in Figure 8 to which the digital watermark 16 is pasted, a file format name and a name of the image data 19 in the hard disc or the database server in association with the URL (digital watermark image data storage means). Further, the server 11 distributes (downloads) the image data 19 in Figure 8 to which the digital watermark 16 is pasted to the client terminals 12A to 12C (servers) via the Internet 13 (image data distribution means) (S-43). At the client terminals 12A to 12C, the digital watermark 16 pasted to the image data 19 cannot be separated. The image data 19 distributed from the server 11 is displayed (output) on the displays of the client terminals 12A to 12C in a state where the digital watermark 16 is pasted, and printed (output) by the printers of the terminals 12A to 12C in a state where the digital watermark 16 is pasted.

When the rank of the user is rank (C), and it is necessary to paste a digital watermark to the image data, the image data distribution server 11 judges that the display form of the image data is required to be changed to a large extent. As illustrated in Figure 9, the server 11 pastes the digital watermark 17 in which "Confidential" written in decorative letters, "Copyright" written in decorative letters, "NoCopy" written in decorative letters, a URL of the user (client terminals 12A to 12C) who requests the image data, written in substantially standard characters, an e-mail address of the user who requests the image data, written in substantially standard characters, and a digital photograph of the user who requests the image data are displayed and predetermined decoration and predetermined pattern are provided around the characters, the URL, the e-mail address and the digital photograph, to the image data so as not to be able to be separated (changes the display form of the image data) (display form changing means) (S-42). A display ratio of the digital watermark 17 pasted to the image data 20 of Figure 9 is larger than that of the digital watermark of Figure 8, more decoration and pattern are provided to the digital watermark 17 than those in Figure 9, and the number of terms and pictures of the digital watermark 17 is larger than that of Figure 9 by "NoCopy" being added in addition to "Confidential" and "Copyright".

After pasting the digital watermark 17 to the image data, the image data distribution server 11 stores the image data 20 in Figure 9 to which the digital watermark 17 is pasted, a file format name and a name of the image data 20 in the hard disc or the database server in association with the URL (digital watermark image data storage means). Further, the server 11 distributes (downloads) the image data 20 in Figure 9 to which the digital watermark 17 is pasted to the client terminals 12A to 12C (servers) via the Internet 13 (image data distributing means) (S-43). At the client terminals 12A to 12C, the digital watermark 17 pasted to the image data 20 cannot be separated. The image data 20 distributed from the server 11 is displayed (output) on the displays of the client terminals 12A to 12C in a state where the digital watermark 17 is pasted and printed (output) by the printers of the terminals 12A to 12C in a state where the digital watermark 17 is pasted.

To narrow down and designate image data, necessary data is input to at least one input area of the image data category input area, the image data keyword input area and the file format input area, and when the image data search button is clicked, the image data distribution server 11 extracts image data in the input category, image data having the input keyword, or image data having the input file format from the hard disc or the database server and displays a search result screen on which the image data corresponding to the category, the keyword or the file format is displayed on the displays of the client terminals 12A to 12C.

To receive distribution of predetermined image data among the searched image data, the user designates image data desired to be distributed in the image data display region, and clicks the distribution execution button. When the distribution execution button is clicked, the image data distribution server 11 judges that the designated image data is to be distributed (S-40), extracts the designated image data from the hard disc or the database server, and determines whether or not it is necessary to paste a digital watermark to the image data from a task indicating that it is necessary to paste a digital watermark or a task indicating that it is not necessary to paste a digital watermark attached to the designated image data (S-41). The server 11 selects a digital watermark to be pasted to the image data for which it is necessary to paste a digital watermark according to the rank of the user after authentication, and pastes the selected digital watermark to the image data so as not to be able to be separated (S-42). The server 11 distributes the image data to which the digital watermark is pasted to the client terminals 12A to 12C via the Internet 13 (image data distributing means) (S-43).

The image data distribution server 11 makes the display ratio of the digital watermark 17 (the display ratio of the digital watermark with respect to the whole image data) to be pasted to the image data to be distributed to the user having rank (C) (low level) of the access authority (image data for which the display form is required to be changed to a large extent) larger than the display ratio of the digital watermark 16 to be pasted to the image data to be distributed to the user having rank (B) (medium level) of the access authority (image data for which the display form is required to be changed to a medium extent). Therefore, the display form of the image data 20 to be distributed to the user having rank (C) of the access authority is changed to a larger extent than the image data 19 to be distributed to the user having rank (B) of the access authority. For example, when the display ratio of the digital watermark 16 with respect to the whole image data (100%) for the user having rank (B) is set between 12 and 27%, the display ratio of the digital watermark 17 with respect to the whole image data (100%) for the user having rank (C) is set between 29 and 43%.

The image data distribution server 11 makes the display ratio of the digital watermark 16 (the display ratio of the digital watermark with respect to the whole image data) to be pasted to the image data to be distributed to the user having rank (B) of the access authority larger than the display ratio of the digital watermark 15 to be pasted to the image data to be distributed to the user having rank (A) (high level) of the access authority (image data for which the display form is required to be changed to a small extent). Therefore, the display form of the image data 19 to be distributed to the user having rank (B) of the access authority is changed to a larger extent than the display form of the image data 18 to be distributed to the user having rank (A) of the access authority. For example, when the display ratio of the digital watermark 15 with respect to the whole image data (100%) for the user having rank (A) is set between 2 and 10%, the display ratio of the digital watermark 16 with respect to the whole image data (100%) for the user having rank (B) is set between 12 and 27%.

Because the image data distribution server 11 makes the display ratio of the digital watermark 17 for the image data to be distributed to the user having rank (C) larger than the display ratio of the digital watermark 16 for the image data to be distributed to the user having rank (B) and pastes the digital watermark 17 to the image data so as not to be able to be separated at the client terminals 12A to 12C, the digital watermark 17 cannot be separated at the terminals 12A to 12C, and it is possible to strongly insist on the necessity of the image data 20 being kept confidential or protected to the user having rank (C) who views the image data 20 to which the digital watermark 17 with a large display ratio is pasted, so that it is possible to prevent the image data 20 distributed to the user having rank (C) from leaking, being copied or duplicated.

Because the image data distribution server 11 makes the display ratio of the digital watermark 16 for the image data to be distributed to the user having rank (B) larger than the display ratio of the digital watermark 15 for the image data to be distributed to the user having rank (A) and pastes the digital watermark 16 to the image data so as not to be able to be separated at the client terminals 12A to 12C, the digital watermark 16 cannot be separated at the terminals 12A to 12C, and it is possible to insist on the necessity of the image data 19 being kept confidential or protected to the user having rank (B) who views the image data 19 to which the digital watermark 16 having a medium display ratio is pasted, so that it is possible to prevent the image data 19 distributed to the user having rank (B) from leaking, being copied or duplicated. Further, by also pasting the digital watermark 15 having a predetermined display ratio to the image data 18 to be distributed to the user having rank (A), it is possible to prevent the image data 18 from leaking, being copied or duplicated.

The image data distribution server 11 adds more decoration to the digital watermark 17 to be pasted to the image data to be distributed to the user having rank (C) of the access authority than decoration added to the digital watermark 16 to be pasted to the image data to be distributed to the user having rank (B). Therefore, the display form of the image data 20 to be distributed to the user having rank (C) of the access authority is changed to a larger extent than the display form of the image data 19 to be distributed to the user having rank (B). For example, given that no decoration of the digital watermark is 0%, the ratio of the decoration of the digital watermark 16 for the user having rank (B) is set between 8 and 12%, and the ratio of the decoration of the digital watermark 17 for the user having rank (C) is set between 14 and 18%.

The image data distribution server 11 adds more decoration to the digital watermark 16 to be pasted to the image data to be distributed to the user having rank (B) of the access authority than the decoration added to the digital watermark 15 to be pasted to the image data to be distributed to the user having rank (A). Therefore, the display form of the image data 19 to be distributed to the user having rank (B) of the access authority is changed to a larger extent than the display form of the image data 17 to be distributed to the user having rank (A) of the access authority. For example, given that no decoration of the digital watermark is 0%, the ratio of the decoration of the digital watermark 15 for the user having rank (A) is set between 2 and 6%, and the ratio of the decoration of the digital watermark 16 for the user having rank (B) is set between 8 and 12%.

Because the image data distribution server 11 adds more decoration of the digital watermark 17 to be pasted to the image data to be distributed to the user having rank (C) than the decoration added to the digital watermark 16 to be pasted to the image data to be distributed to the user having rank (B) and pastes the digital watermark 17 so as not to be able to be separated at the client terminals 12A to 12C, the digital watermark 17 cannot be separated at the terminals 12A to 12C, and it is possible to strongly insist on the necessity of the image data 20 being kept confidential or protected to the user having rank (C) who views the image data 20 to which the digital watermark 17 having large decoration is pasted, so that it is possible to prevent the image data 20 distributed to the user having rank (C) from leaking, being copied or duplicated.

Because the image data distribution server 11 adds more decoration to the digital watermark 16 to be pasted to the image data to be distributed to the user having rank (B) than the decoration added to the digital watermark 15 to be pasted to the image data to be distributed to the user having rank (A) and pastes the digital watermark 16 so as not to be able to be separated at the client terminals 12A to 12C, the digital watermark 16 cannot be separated at the terminals 12A to 12C, and it is possible to insist on the necessity of the image data 19 being kept confidential or protected to the user having rank (B) who views the image data 19 to which the digital watermark 16 having medium level decoration is pasted, so that it is possible to prevent the image data 19 distributed to the user having rank (B) from leaking, being copied or duplicated. Further, by also pasting the digital watermark 15 having predetermined decoration to the image data 18 to be distributed to the user having rank (A) of the access authority so as not to be able to be separated, it is possible to prevent the image data 18 from leaking, being copied or duplicated.

The image data distribution server 11 provides more pattern to the digital watermark 17 to be pasted to the image data to be distributed to the user having rank (C) of the access authority than pattern provided to the digital watermark 16 to be pasted to the image data to be distributed to the user having rank (B) of the access authority. Therefore, the display form of the image data 20 to be distributed to the user having rank (C) of the access authority is changed to a larger extent than the display form of the image data 19 to be distributed to the user having rank (B) of the access authority. For example, given that no pattern of the digital watermark is 0%, the ratio of the pattern of the digital watermark 16 for the user having rank (B) is set between 8 and 12%, and the ratio of the pattern of the digital watermark 17 for the user having rank (C) is set between 14 and 18%.

The image data distribution server 11 provides more pattern to the digital watermark 16 to be pasted to the image data to be distributed to the user having rank (B) of the access authority than pattern provided to the digital watermark 15 to be pasted to the image data to be distributed to the user having rank (A) of the access authority. Therefore, the display form of the image data 19 to be distributed to the user having rank (B) of the access authority is changed to a larger extent than the display form of the image data 18 to be distributed to the user having rank (A) of the access authority. For example, given that no pattern of the digital watermark is 0%, the ratio of the pattern of the digital watermark 15 for the user having rank (A) is set between 2 and 6%, and the ratio of the pattern of the digital watermark 16 for the user having rank (B) is set between 8 and 12%.

Because the image data distribution server 11 provides more pattern to the digital watermark 17 to be pasted to the image data to be distributed to the user having rank (C) than pattern provided to the digital watermark 16 to be pasted to the image data to be distributed to the user having rank (B) and pastes the digital watermark 17 so as not to be able to be separated at the client terminals 12A to 12C, the digital watermark 17 cannot be separated at the terminals 12A to 12C, and it is possible to strongly insist on the necessity of the image data 20 being kept confidential or protected to the user having rank (C) who views the image data 20 to which the digital watermark 17 with more pattern is pasted, so that it is possible to prevent the image data 20 distributed to the user having rank (C) from leaking, being copied or duplicated.

Because the image data distribution server 11 provides more pattern to the digital watermark 16 to be pasted to the image data to be distributed to the user having rank (B) than pattern provided to the digital watermark 15 to be pasted to the image data to be distributed to the user having rank (A) and pastes the digital watermark 16 so as not to be able to be separated at the client terminals 12A to 12C, the digital watermark 16 cannot be separated at the terminals 12A to 12C, and it is possible to insist on the necessity of the image data 19 being kept confidential or protected to the user having rank (B) who views the image data 19 to which the digital watermark 16 with a medium level of pattern is pasted, so that it is possible to prevent the image data 19 distributed to the user having rank (B) from leaking, being copied or duplicated. Further, by also pasting the digital watermark 15 with predetermined pattern to the image data 18 to be distributed to the user having rank (A) of the access authority, it is possible to prevent the image data 18 from leaking, being copied or duplicated.

The image data distribution server 11 makes the number of terms of the digital watermark 17 to be pasted to the image data to be distributed to the user having rank (C) of the access authority larger than the number of terms of the digital watermark 16 to be pasted to the image data to be distributed to the user having rank (B) of the access authority. Therefore, the display form of the image data 20 to be distributed to the user having rank (C) of the access authority is changed to a larger extent than the display form of the image data 19 to be distributed to the user having rank (B) of the access authority. For example, when the number of terms of the digital watermark 16 for the user having rank (B) is set two, the number of terms of the digital watermark 17 for the user having rank (C) is set three.

The image data distribution server 11 makes the number of terms of the digital watermark 16 to be pasted to the image data to be distributed to the user having rank (B) of the access authority larger than the number of terms of the digital watermark 15 to be pasted to the image data to be distributed to the user having rank (A) of the access authority. Therefore, the display form of the image data 19 to be distributed to the user having rank (B) of the access authority is changed to a larger extent than the display form of the image data 18 to be distributed to the user having rank (A) of the access authority. For example, when the number of terms of the digital watermark 15 for the user having rank (A) is set one, the number of terms of the digital watermark 16 for the user having rank (B) is set two.

Because the image data distribution server 11 makes the number of terms of the digital watermark 17 to be pasted to the image data to be distributed to the user having rank (C) larger than the number of terms of the digital watermark 16 to be pasted to the image data to be distributed to the user having rank (B) and pastes the digital watermark 17 so as not to be able to be separated at the client terminals 12A to 12C, the digital watermark 17 cannot be separated at the terminals 12A to 12C, and it is possible to strongly insist on the necessity of the image data 20 being kept confidential or protected to the user having rank (C) who views the image data 20 to which the digital watermark 17 with a large number of terms is pasted, so that it is possible to prevent the image data 20 distributed to the user having rank (C) from leaking, being copied or duplicated.

Because the image data distribution server 11 makes the number of terms of the digital watermark 16 to be pasted to the image data to be distributed to the user having rank (B) larger than the number of terms of the digital watermark 15 to be pasted to the image data to be distributed to the user having rank (A) and pastes the watermark 16 so as not to be able to be separated at the client terminals 12A to 12C, the digital watermark 16 cannot be separated at the terminals 12A to 12C, and it is possible to insist on the necessity of the image data 19 being kept confidential or protected to the user having rank (B) who views the image data 19 to which the digital watermark 16 having the larger number of terms than the number of terms for the user having rank (A) is pasted, so that it is possible to prevent the image data distributed to the user having rank (B) from leaking, being copied or duplicated. Further, by also pasting the digital watermark 15 having a predetermined number of terms to the image data 18 to be distributed to the user having rank (A) of the access authority, it is possible to prevent the image data 18 from leaking, being copied or duplicated.

The image data distribution server 11 makes the number of pictures of the digital watermark 17 to be pasted to the image data to be distributed to the user having rank (C) of the access authority larger than the number of pictures of the digital watermark 16 to be pasted to the image data to be distributed to the user having rank (B) of the access authority. Therefore, the display form of the image data 20 to be distributed to the user having rank (C) of the access authority is changed to a larger extent than the display form of the image data 19 to be distributed to the user having rank (B) of the access authority. For example, when the number of pictures of the digital watermark 16 for the user having rank (B) is set two, the number of pictures of the digital watermark 17 for the user having rank (C) is set three.

The image data distribution server 11 makes the number of pictures of the digital watermark 16 to be pasted to the image data to be distributed to the user having rank (B) of the access authority larger than the number of pictures of the digital watermark 15 to be pasted to the image data to be distributed to the user having rank (A) of the access authority. Therefore, the display form of the image data 19 to be distributed to the user having rank (B) of the access authority is changed to a larger extent than the display form of the image data 18 to be distributed to the user having rank (A) of the access authority. For example, when the number of pictures of the digital watermark 15 for the user having rank (A) is set one, the number of pictures of the digital watermark 16 for the user having rank (B) is set two.

Because the image data distribution server 11 makes the number of pictures of the digital watermark 17 to be pasted to the image data to be distributed to the user having rank (C) larger than the number of pictures of the digital watermark 16 to be pasted to the image data to be distributed to the user having rank (B) and pastes the digital watermark 17 so as not to be able to be separated at the client terminals 12A to 12C, the digital watermark 17 cannot be separated at the terminals 12A to 12C, and it is possible to strongly insist on the necessity of the image data 20 being kept confidential or protected to the user having rank (C) who views the image data 20 to which the digital watermark 17 having a large number of pictures is pasted, so that it is possible to prevent the image data 20 distributed to the user having rank (C) from leaking, being copied or duplicated.

Because the image data distribution server 11 make the number of pictures of the digital watermark 16 to be pasted to the image data to be distributed to the user having rank (B) larger than the number of pictures of the digital watermark 15 to be pasted to the image data to be distributed to the user having rank (A) and pastes the digital watermark 16 so as not to be able to be separated at the client terminals 12A to 12C, the digital watermark 16 cannot be separated at the terminals 12A to 12C, and it is possible to insist on the necessity of the image data 19 being kept confidential or protected to the user having rank (B) who views the image data 19 to which the digital watermark 16 with a larger number of pictures than the number of pictures for the user having rank (A) is pasted, so that it is possible to prevent the image data 19 distributed to the user having rank (B) from leaking, being copied or duplicated. Further, by also pasting the digital watermark 15 having a predetermined number of pictures to the image data 18 to be distributed to the user having rank (A) of the access authority, it is possible to prevent the image data 18 from leaking, being copied or duplicated.

Because the identification information of each user who requests distribution of the image data is included in the digital watermarks 15 to 17 pasted to the image data, when the image data 18 to 20 leak to others or when the image data 18 to 20 are copied or duplicated, the image data distribution server 11 can know a user who requests the image data 18 to 20 or client terminals 12A to 12C (users) to which the image data 18 to 20 are distributed. Therefore, the leakage destination, copy destination or duplication destination can be recognized, which can serve as a deterrent to leakage, copy or duplication of the image data 18 to 20, so that it is possible to prevent the image data 18 to 20 from leaking, being copied or duplicated.

The image data distribution server 11 classifies the image data into image data to which digital watermarks 15 to 17 are required to be pasted and image data to which digital watermarks 15 to 17 are not required to be pasted based on content of the electronic information and pastes the digital watermarks 15 to 17 only to the image data to which the digital watermarks 15 to 17 are required to be pasted. Therefore, for example, by pasting the digital watermarks 15 to 17 such as "Confidential" and "Copyright" to the image data which includes highly-confidential content or which includes academic value so as not to be able to be separated at the server 11 side and distributing the image data to which the digital watermarks 15 to 17 are pasted from the server 11 to the client terminals 12A to 12C, it is possible to prevent the image data 18 to 20 which are images formed from the electronic information including highly-confidential content or academic value from leaking to others. Further, by pasting the digital watermarks 15 to 17 such as "NoCopy" and "No Duplication" to the image data which are images formed from the electronic information including highly-confidential content or academic value so as not to be able to be separated at the server 11 side and distributing the image data 18 to 20 to which the digital watermarks 15 to 17 are pasted from the server 11 to the client terminals 12A to 12C, it is possible to prevent the image data 18 to 20 from being copied or duplicated.

The image data distribution server 11 classifies the image data into image data to which the digital watermarks 15 to 17 are required to be pasted and image data to which the digital watermarks 15 to 17 are not required to be pasted based on the file format of the electronic information and pastes the digital watermarks 15 to 17 only to the image data to which the digital watermarks 15 to 17 are required to be pasted. Therefore, for example, by pasting the digital watermarks 15 to 17 such as "Confidential" and "Copyright" to the image data which are images formed from the electronic information in a file format, required to be kept confidential or protected so as not to be able to be separated at the server 11 side and distributing the image data 18 to 20 to which the digital watermarks 15 to 17 are pasted from the server 11 to the client terminals 12A to 12C, it is possible to prevent the image data 18 to 20 from leaking to others. Further, by pasting the digital watermarks 15 to 17 such as "NoCopy" and "No Duplication" to the image data which are images formed from the electronic information in a file format, not allowed to be copied or duplicated so as not to be able to be separated at the server 11 side and distributing the image data 18 to 20 to which the digital watermarks 15 to 17 are pasted from the server 11 to the client terminals 12A to 12C, it is possible to prevent the image data 18 to 20 from being copied or duplicated.

### [Reference Signs List]

10 Image data distribution system
11 Image data distribution server
12A to 12C Client terminals
13 Internet
14A and 14B Client terminals
15 Digital watermark
16 Digital watermark
17 Digital watermark
18 Image data
19 Image data
20 Image data

## Claims

1. An image data distribution server distributing various types of a plurality of pieces of image data to clients via the Internet in response to requests from a plurality of users, the image data distribution server comprising:
image data creating means for creating various types of a plurality of pieces of image data which are individual images formed from various types of a plurality of pieces of electronic information stored in the image data distribution server;
rank-based classifying means for, when the users request distribution of the image data via the clients, classifying access authority of the users for the image data into ranks based on authentication results of the users;
display form changing means for changing display forms of the image data according to ranks of the access authority classified by the rank-based classifying means; and
image data distributing means for distributing the various types of a plurality of image data including the image data for which the display forms are changed by the display form changing means to the clients.

2. The image data distribution server according to claim 1, wherein the display form changing means changes a display form of the image data to be distributed to a user having a lower rank of the access authority to a larger extent than a display form of the image data to be distributed to a user having a medium rank of the access authority and changes the display form of the image data to be distributed to the user having the medium rank of the access authority to a larger extent than a display form of the image data to be distributed to a user having a higher rank of the access authority.

3. The image data distribution server according to claim 1 or 2, wherein the image data distribution server comprises:
digital watermark creating means for creating various types of a plurality of unique digital watermarks corresponding to the ranks of the access authority,
wherein the display form changing means changes the display forms of the image data by pasting the digital watermarks corresponding to the ranks of the access authority classified by the rank-based classifying means to the image data so as not to be able to be separated.

4. The image data distribution server according to claim 3, wherein the display form changing means makes a display ratio of the digital watermark for image data which requires large change of a display form larger than a display ratio of the digital watermark for image data which requires medium change of a display form and makes the display ratio of the digital watermark for the image data which requires medium change of the display form larger than a display ratio of the digital watermark for image data which requires small change of a display form.

5. The image data distribution server according to claim 3 or 4, wherein the display form changing means adds more decoration to the digital watermark to be pasted to the image data which requires large change of the display form than decoration added to the digital watermark to be pasted to the image data which requires medium change of the display form and adds more decoration to the digital watermark to be pasted to the image data which requires medium change of the display form than decoration added to the digital watermark to be pasted to the image data which requires small change of the display form.

6. The image data distribution server according to any of claims 3 to 5, wherein the display form changing means provides more pattern to the digital watermark to be pasted to the image data which requires large change of the display form than pattern provided to the digital watermark to be pasted to the image data which requires medium change of the display form and provides more pattern to the digital watermark to be pasted to the image data which requires medium change of the display form than pattern provided to the digital watermark to be pasted to the image data which requires small change of the display form.

7. The image data distribution server according to any of claims 3 to 6, wherein the display form changing means makes the number of terms of the digital watermark to be pasted to the image data which requires large change of the display form larger than the number of terms of the digital watermark to be pasted to the image data which requires medium change and makes the number of terms of the digital watermarks to be pasted to the image data which requires medium change of the display form larger than the number of terms of the digital watermarks to be pasted to the image data which requires small change of the display form.

8. The image data distribution server according to any of claims 3 to 7, wherein the display form changing means makes the number of pictures of the digital watermark to be pasted to the image data which requires large change of the display form larger than the number of pictures of the digital watermark to be pasted to the image data which requires medium change of the display form and makes the number of pictures of the digital watermark to be pasted to the image data which requires medium change of the display form larger than the number of pictures of the digital watermark to be pasted to the image data which requires small change of the display form.

9. The image data distribution server according to any of claims 3 to 8, wherein the digital watermark includes identification information of each user who requests distribution of the image data.

10. The image data distribution server according to any of claims 3 to 9, further comprising data first classifying means for classifying the image data into image data to which the digital watermark is required to be pasted and image data to which the digital watermark is not required to be pasted based on content of the electronic information,
wherein the display form changing means pastes the digital watermark only to the image data to which the digital watermark is required to be pasted classified by the data first classifying means.

11. The image data distribution server according to any of claims 3 to 10, further comprising data second classifying means for classifying the image data into image data to which the digital watermark is required to be pasted and image data to which the digital watermark is not required to be pasted based on a file format of the electronic information,
wherein the display form changing means pastes the digital watermark only to the image data to which the digital watermark is required to be pasted classified by the data second classifying means.
